# FASCICULE DE BREVET EUROPEEN

(11) **EP 0 704 636 B1**
(45) Date de publication et mention de la délivrance du brevet: **13.03.2002**
(21) Numéro de dépôt: 95115208.1
(22) Date de dépôt: 27.09.1995
(51) Int. Cl.: F16D 13/64, F16D 69/00

(54) **Embrayage à glissement contrôlé, notamment pour véhicule automobile**
Kontrolliert gleitende Kupplung, insbesondere für Kraftfahrzeuge
Controllably sliding clutch, especially for automotive vehicles

(30) Priorité: 28.09.1994 FR 9411571
(43) Date de publication de la demande: 03.04.1996
(73) Titulaire: VALEO, 75017 Paris (FR)
(72) Inventeur: Carmillet, Roger Francis, F-75018 Paris (FR)
(74) Mandataire: Gamonal, Didier

(56) Documents cités:
- DE-A- 2 757 801
- DE-A- 3 614 600
- DE-A- 4 310 978
- US-A- 1 864 252
- US-A- 2 058 655
- US-A- 2 135 126
- US-A- 4 305 494
- US-A- 4 907 677
- PATENT ABSTRACTS OF JAPAN vol. 12 no. 302 (M-732) & JP-A-63 076928 (TOYOTA MOTOR)

## Description

L'invention concerne les embrayages, notamment pour véhicules automobiles.

Il peut s'agir aussi bien d'embrayages intervenant isolement que d'embrayages, dits de verrouillage ("lock-up"), intégrés à un dispositif d'accouplement hydraulique.

Ramenés à leurs éléments essentiels, ces embrayages comportent, globalement, un plateau de réaction, et, monté mobile axialement par rapport à celui-ci, un plateau de pression, avec, intervenant entre ces deux plateaux, des garnitures de frottement.

Outre une fonction de coupure permettant d'assurer à la demande un engagement ou un désengagement entre une partie menante et une partie menée, ces embrayages ont usuellement une fonction de filtrage à l'égard des vibrations susceptibles de se transmettre d'une de ces parties à l'autre.

Pour l'exercice de cette fonction de filtrage, ils comportent, classiquement, au sein d'un organe subdivisé en deux parties, qu'il s'agisse du disque d'embrayage portant usuellement les garnitures de frottement ou qu'il s'agisse du plateau de réaction lorsque celui-ci constitue ce qui est communément appelé un double volant amortisseur, des moyens de filtrage associant des moyens d'amortissement à des moyens élastiques interposés circonférentiellement entre ces deux parties.

Mais ces moyens de filtrage classiques s'avèrent inefficaces à l'égard de certaines vibrations.

Le parti peut alors être pris de laisser patiner l'embrayage pour ces vibrations, ou, autrement dit, d'en assurer l'absorption par un glissement, bien entendu contrôlé, de cet embrayage.

De même, dans certaines réalisations, le parti est pris de laisser se développer un tel glissement contrôlé pour certaines plages du régime moteur.

Le problème, en l'espèce, est que les garnitures de frottement usuellement mises en oeuvre dans un embrayage se prêtent mal à ce glissement, qui, de surcroît, doit être susceptible d'intervenir en permanence.

En effet, ces garnitures de frottement sont destinées par nature à assurer le démarrage de la partie menée et une transmission de couple de la partie menante à celle-ci, et, pour cette double fonction, le coefficient de frottement de leur matériau constitutif est usuellement relativement élevé, en étant en pratique de l'ordre de 0,30.

Le glissement se fait donc plutôt mal, et il conduit inévitablement à une usure prématurée des garnitures de frottement.

En outre les garnitures de frottement usuelles supportent mal l'élévation de température inévitablement inhérente au glissement, au risque éventuel de s'en trouver détériorées, et, médiocres conductrices de la chaleur, elles ne sont pas non plus à même d'assurer par elles-mêmes une bonne évacuation de celle-ci.

Usuellement, ces garnitures de frottement sont disposées annulairement suivant une piste unique.

Pour des raisons diverses, qui n'ont pas systématiquement trait à la recherche d'un quelconque glissement contrôlé, il a cependant déjà été proposé de les répartir suivant deux pistes concentriques distinctes.

C'est le cas par exemple dans les documents US-A-2 135 126 et 2 058 655.

Dans le document US-A-2 135 126, dans lequel il est proposé de choisir pour matériaux constitutifs des garnitures de frottement des deux pistes des matériaux de frottement présentant des coefficients de frottement différents d'une de ces pistes à l'autre, il est recherché une meilleure douceur, ou progressivité, pour l'engagement, pour que celui-ci puisse se produire sans à-coup ni broutement.

Il en est sensiblement de même dans le document US-A-2 058 655, dans lequel il est associé aux garnitures de frottement de l'une et l'autre des pistes des moyens de progressivité. Dans le document US-A-4,305,494, conforme au préambule de la revendication 1, le disque de friction a une forme tronconique au niveau de ses garnitures de frottement pour permettre un mouvement axial de celui-ci le long d'un arbre mené en sorte qu'au repos il est en contact local avec les plateaux de pression et de réaction.

Dans tous les cas, il n'est nullement recherché un quelconque glissement contrôlé permanent.

L'invention a pour objet un embrayage dans lequel, au contraire, un tel glissement contrôlé intervient systématiquement.

Conformément à l'invention ce problème est résolu par la partie caractérisante de la revendication 1.

Grâce à l'invention, le ou les garnitures de frottement de la piste dévolue au contrôle de glissement, sont ainsi avantageusement à même de résister à la chaleur développée lors d'un tel glissement.

Préférentiellement, le matériau réfractaire mis en oeuvre pour là où les garnitures de frottement de cette première piste est choisi pour présenter un coefficient de frottement relativement faible compris en pratique entre 0,15 et 0,20, particulièrement adapté au glissement recherché.

Conjointement, le matériau constitutif de la où des garnitures de frottement de l'autre des pistes, qui est alors plus particulièrement dévolue à la transmission de couple, a un coefficient de frottement usuel, de l'ordre par exemple de 0,30, particulièrement adapté à une telle transmission.

En bref il est avantageusement assuré, dans l'embrayage suivant l'invention, une séparation des fonctions, entre une piste de garnitures de frottement dévolue au contrôle de glissement et une piste de garnitures de frottement dévolue à la transmission de couple.

Le compromis qui en résulte rend cet embrayage particulièrement efficace à l'encontre des vibrations, et il peut ainsi être possible d'éviter d'avoir à faire appel à un double volant amortisseur pour un bon filtrage de celles-ci.

Les caractéristiques et avantages de l'invention ressortiront d'ailleurs de la description qui va suivre, à titre d'exemple, en référence aux dessins schématiques annexés sur lesquels:
la figure 1 est une vue partielle en coupe axiale d'un embrayage suivant l'invention ;
la figure 2 est un bloc diagramme illustrant son fonctionnement ;
les figures 3, 4, 5 sont des vues partielles en coupe axiale, qui, analogues à celle de la figure 1, se rapportent chacune respectivement à d'autres formes de réalisation.

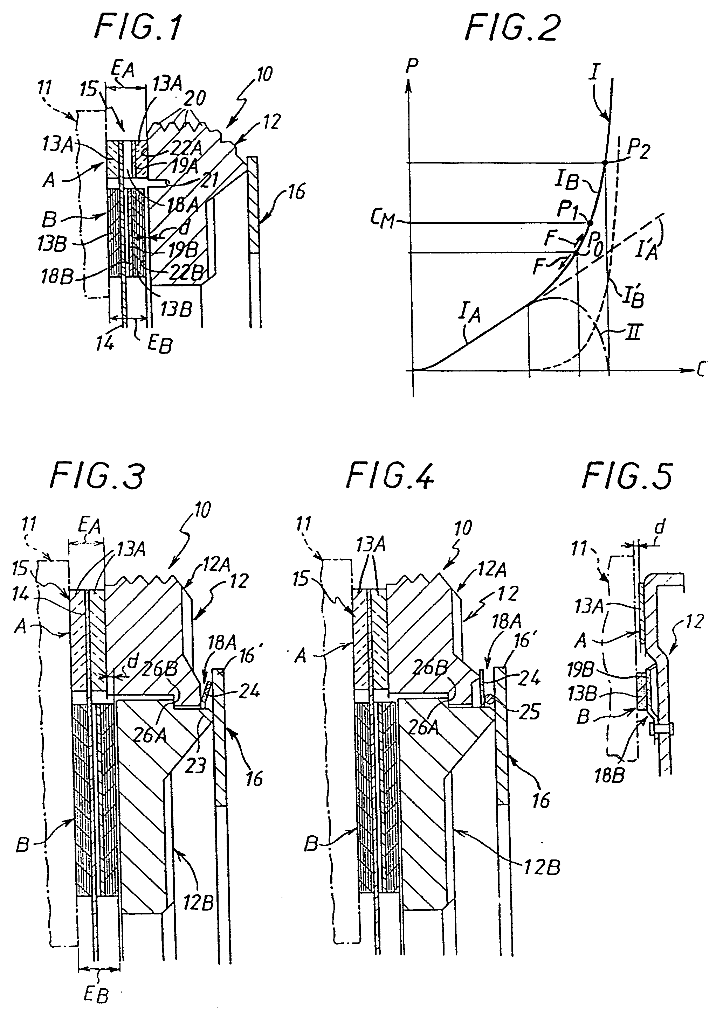

Les figures 1 à 4 illustrent, à titre d'exemple, l'application de l'invention à un embrayage 10 destiné à intervenir isolement.

Ramené à ses éléments essentiels, cet embrayage 10 comporte, de manière connue en soi, un plateau de réaction 11, schématisé en traits interrompus sur les figures, et, monté mobile axialement par rapport à ce plateau de réaction 11, un plateau de pression 12, avec, intervenant entre ces deux plateaux 11, 12, des garnitures de frottement 13A, 13B réparties annulairement suivant deux pistes A, B concentriques distinctes.

La piste 1 est radialement la plus externe, et la piste B est radialement la plus interne.

S'agissant d'un embrayage 10 destiné à intervenir isolément, les garnitures de frottement 13A, 13B sont portées par un voile 14, en étant disposées à la périphérie externe de ce voile 14, et en s'étendant de part et d'autre de celui-ci pour chaque piste A, B.

L'ensemble constitue un disque d'embrayage 15, ou "friction", qui, lui aussi, est monté mobile axialement par rapport au plateau de réaction 11.

Les plateaux 11, 12 sont solidaires en rotation d'un premier arbre, non représenté, en pratique un arbre menant, et, plus précisément, l'arbre de sortie du moteur dans le cas de l'équipement d'un véhicule automobile, tandis que, conjointement, le disque d'embrayage 15 est solidaire en rotation d'un deuxième arbre, également non représenté, en pratique un arbre mené, et, plus précisément, l'arbre d'entrée de la boîte de vitesses pour un véhicule automobile.

De manière connue en soi, enfin, le plateau de pression 12 est soumis à des moyens élastiques à action axiale, ici un diaphragme 16, qui le sollicitent en permanence en direction du plateau de réaction 11, pour le serrage des garnitures de frottement 13A, 13B, et, ainsi, l'engagement de l'embrayage 10.

Suivant l'invention et conjointement, d'une part, les matériaux constitutifs des garnitures de frottement 13A, 13B sont différents d'une des pistes A, B à l'autre, et, d'autre part, il est associé aux garnitures de frottement 13A, 13B de l'une au moins de ces pistes A, B, des moyens de progressivité 18A, 18B.

A chaque piste A,B il peut être associé deux garnitures de frottement (figure 1 à 4) ou une garniture de frottement (figure 5).

Sur les figures 1 à 4, il est associé des moyens de progressivité 18A, 18B aux garnitures de frottement 13A, 13B de l'une et de l'autre des pistes A, B.

A la figure 1, ces moyens de progressivité 18A, 18B résultent à titre d'exemple de ce que, d'un côté au moins du voile 14, les garnitures de frottement 13A, 13B sont chacune individuellement portées par une pale 19A, 19B, qui, venue du voile 14 lui-même, par découpe appropriée de celui-ci, ou rapportée sur ce voile 14, est élastiquement déformable axialement et est décalée axialement au repos par rapport à la partie courante du voile 14.

Suivant l'invention, l'une des pistes A, B est dévolue à un contrôle de glissement permanent.

Ici, il s'agit de la piste A.

Préférentiellement, le matériau constitutif des garnitures de frottement 13A de cette piste A est un matériau réfractaire.

Par exemple, ce matériau réfractaire peut être un matériau fritté à base de bronze.

En variante, il peut par exemple aussi s'agir d'un matériau réfractaire à base de carbone.

Dans l'un et l'autre cas, il présente avantageusement une grande stabilité de frottement et n'est avantageusement l'objet que d'une faible usure en service.

A même de résister à la chaleur, il est également favorable à une bonne évacuation de celle-ci.

Ce matériau réfractaire, enfin, a, préférentiellement, un coefficient de frottement relativement faible, en étant par exemple compris entre 0,15 et 0,20.

Compte tenu de ce qui précède, les garnitures de frottement 13A de la piste A sont en pratique à même de générer une forte puissance, mais des gradients thermiques assez faibles.

Corollairement, la piste B est dévolue, suivant l'invention, à la transmission de couple, tant au démarrage qu'au cours de l'engagement de l'embrayage 10.

Le matériau constitutif des garnitures de frottement 13B de cette piste B est, donc de type classique, et il a, en pratique, un coefficient de frottement relativement important, de l'ordre par exemple de 0,30.

A la figure 1, il existe au repos suivant l'invention, un décalage axiale d entre les garnitures de frottement 13A de la piste A et celles 13B, de la piste B, pour une intervention différenciée dans le temps de ces pistes A, B à l'engagement.

Autrement dit, au repos, et tel que représenté sur cette figure 1, l'épaisseur axiale E_{A} du disque d'embrayage 15 au droit de la piste A est supérieure à son épaisseur axiale E_{B} au droit de la piste B.

La piste A dévolue au contrôle de glissement est donc la première à intervenir à l'engagement.

Il suffit, par exemple, pour ce faire, de conformer en conséquence les pales 19A, 19B.

Ici, les moyens de progressivité 18A, 18B dus à ces pales 19A, 19B pour les pistes A, B ont des coefficients de progressivité différents.

Autrement dit, les raideurs des pales 19A, 19B sont différentes.

Préférentiellement, le coefficient de progressivité des moyens de progressivité 18A des garnitures de frottement 13A de la piste A la première à intervenir est inférieur à celui des moyens de progressivité 18B des garnitures de frottement 13B de l'autre piste B.

Autrement dit, le décalage axial d résultant de la différence entre les épaisseurs axiales E_{A}, E_{B} est établi de manière telle que la piste A de garnitures de frottement 13A la première à intervenir à l'engagement de l'embrayage 10 est celle pour laquelle les moyens de progressivité ont le coefficient de progressivité le plus faible.

Sur le diagramme de la figure 2, sur lequel ont été représentées, en abscisses, la course C du plateau de réaction 12 par rapport au plateau de pression 11, et, en ordonnées, la charge P transmise de des plateaux 11, 12 au disque d'embrayage 15, la courbe I représentative de l'évolution de cette charge P en fonction de cette course C comporte, successivement, tel que représenté en trait continu, deux tronçons I_{A}, I_{B}

Le tronçon I_{A} correspond à l'intervention de la seule piste A.

Il appartient à une droite I'_{A} qui, représentative de cette seule piste A, a une pente relativement faible.

En pratique, la pente de tronçon I_{A} de la courbe I est choisie suffisamment faible pour avoir un bon glissement à ce niveau.

Le tronçon I_{B} de la courbe I résulte de la superposition à cette droite I'_{A} d'une courbe I'_{B} représentative de la seule piste B.

Il se raccorde donc tangentiellement au tronçon I_{A} précédent, avec une pente qui va en croissant par rapport à celle de celui-ci.

Sur le diagramme de la figure 2 on a représenté le point P₁ correspondant à un fonctionnement pour lequel, en l'absence de glissement, la charge P transmise est égale au couple moteur C_{M}, le point P₂ correspondant à un fonctionnement pour lequel, compte tenu d'un certain coefficient de sécurité, cette charge P est supérieure au couple C_{M}, et le point P₀ correspondant à un fonctionnement pour lequel, compte tenu du glissement recherché, la charge P est inférieure au couple moteur C_{M}.

Tel que schématisé par des flèches F de sens opposés, il se produit en permanence, dans un sens ou dans l'autre, un certain glissement contrôlé autour de ce point de fonctionnement P₀.

Ici, il est par ailleurs prévu une élimination optimale de la chaleur, par une ventilation activée à la périphérie extérieure du plateau de pression 12, ce qui favorise l'évacuation des calories au niveau de la piste A et contribue à diminuer la température de masse au niveau de la piste B.

Ici, le plateau de pression 12 est muni pour ce faire d'ailettes 20 à sa périphérie extérieure.

Dans ce qui précède, le plateau de pression 12 est massif et d'un seul tenant.

Préférentiellement, cependant, et tel que représenté, sa face tournée vers le disque d'embrayage 15 présente annulairement, en creux, une gorge annulaire 21 qui la subdivise radialement en deux zones 22A, 22B correspondant chacune respectivement aux pistes A, B de ce disque d'embrayage 15.

Sur les figures 3 et 4, les moyens de progressivité 18A associés aux garnitures de frottement 13A de la piste A sont intégrés au plateau de pression 12.

A cet effet, celui-ci est réalisé en deux parties 12A, 12B correspondant, chacune respectivement, aux pistes A, B.

Le diaphragme 16 porte sur la partie 12B, mais, par un prolongement 16', il s'étend radialement au-delà du bossage 23 correspondant de celle-ci, et les moyens de progressivité 18A sont constitués par des moyens élastiques à action axiale, ici une ou plusieurs rondelles Belleville 24, qui, prenant appui sur le prolongement 16' du diaphragme 16, soit directement, figure 3, soit par l'intermédiaire d'un jonc 25, figure 4, portent sur la partie 12A.

Pour limiter la course de la partie 12A par rapport à la partie 12B en direction du plateau 11, il est prévu, entre ces parties 12A, 12B, des épaulements transversaux de butée 26A, 26B.

Comme précédemment, la piste A est la première à intervenir.

Mais, à la différence de la disposition précédente, l'épaisseur E_{A} au repos du disque d'embrayage 15 au niveau de cette piste A est inférieure à celle E_{B} de ce disque d'embrayage 15 au niveau de cette piste B.

Autrement dit, le décalage axial d correspondant est, axialement, de signe inverse du précédent.

Si désiré, la ou les rondelles Belleville 24 peuvent être mises à profit pour l'obtention d'une courbe à ensellement pour la courbe représentative de l'évolution de la charge P en fonction de la course C, tel que schématisé en traits interrompus II sur le diagramme de la figure 2, de façon à privilégier la charge sur la partie de l'embrayage 10 correspondant à une transmission de couple, en dehors de la charge autour du point de contrôle de glissement P.

La figure 5 illustre, à tire d'exemple, l'application de l'invention à un embrayage 10 destiné à être incorporé à un dispositif d'accouplement hydraulique dont les autres constituants n'ont pas été représentés.

Le plateau de réaction 11 appartient au carter dont est solidaire en rotation la roue menante de ce dispositif d'accouplement hydraulique, tandis que le plateau de pression 12 est solidaire en rotation de sa roue menée, tout en étant mobile axialement en translation par rapport à celle-ci à la manière d'un piston.

Ici, des moyens de progressivité 18B ne sont associés qu'à la seule piste B, la garniture de frottement 13B correspondante étant portée par une pale 19B elle-même rapportée sur le plateau de pression 12.

Conjointement, la garniture de frottement 13A de la piste A est directement portée, et donc de manière rigide, par ce plateau de réaction 11.

Comme précédemment, un décalage axial d existe au repos entre les pistes A, B.

La piste B, qui est dévolue au contrôle de glissement, et qui est la première à intervenir à l'engagement, est, ici, sur la figure 5, suivant une disposition inverse de la précédente, la piste radialement la plus interne.

Ainsi qu'on le notera, la piste dévolue an contrôle de glissement a, ici, sur l'ensemble des figures une hauteur qui, mesurée radialement, est moindre que celle de la piste dévolue à la transmission de couple, dans la mesure où elle ne doit elle-même assurer la transmission que d'une fraction de ce dernier.

## Revendications

1. Embrayage du genre comportant un plateau de réaction (11), et, monté mobile axialement par rapport à celui-ci, un plateau de pression (12), avec, intervenant annulairement entre ces deux plateaux (11, 12), un disque d'embrayage (15) doté des garnitures de frottement (13A, 13B) réparties suivant deux pistes (A,B) concentriques distinctes, dans lequel l'une des pistes (A, B), dite première piste, d'une part, est dévolue à un contrôle de glissement, et, d'autre part, est associée à des moyens de progressivité (18A, 18B), tandis que l'autre piste (B, A), dite seconde piste, d'une part, est dévolue à la transmission de couple, tant au démarrage qu'au cours de l'engagement de l'embrayage et, d'autre part, a un matériau constitutif de la ou les garnitures de frottement (13A, 13B) différent de celui ou de ceux de la première piste en ayant un coefficient de frottement supérieur à celui de la première piste, et dans lequel au repos - charge nulle transmise par les plateaux de pression et de réaction aux pistes de frottement (A, B) - il existe un décalage axial entre les deux pistes (A, B) en sorte que la première piste est la première à intervenir à l'engagement de l'embrayage (10) et a une hauteur moindre que celle de la deuxième piste, **caractérisé en ce que** en combinaison, d'une part, au repos l'épaisseur axiale (EA) du disque d'embrayage (15) au droit de la première piste (A) est différente de l'épaisseur axiale (EB) du disque d'embrayage (15) au droit de la seconde piste (B) et, d'autre part, le plateau de pression (12) est en deux parties correspondantes chacune respectivement aux pistes, **en ce que** le matériau constitutif de la ou des garnitures de frottement de la première piste (A, B) est en matériau réfractaire présentant une grande stabilité de frottement tout en étant l'objet d'une faible usure en service, et **en ce que** la deuxième piste (B, A) est portée de manière rigide par l'un des plateaux de pression (12) et de réaction (11) ou est associée à des moyens de progressivité ayant un coefficient de progressivité plus élevé que ceux associés à la première piste (A).

2. Embrayage suivant la revendication 1, **caractérisé en ce que** ledit matériau réfractaire est un matériau fritté à base de bronze.

3. Embrayage suivant la revendication 1, **caractérisé en ce que** ledit matériau réfractaire est à base de carbone.

4. Embrayage suivant l'une quelconque des revendications 1 à 3, **caractérisé en ce que** ledit matériau réfractaire a un coefficient de frottement compris entre 0,15 et 0,20.

5. Embrayage suivant l'une quelconque des revendications 1 à 4, **caractérisé en ce que** le matériau constitutif de la ou des garnitures de frottement (13A, 13B) de l'autre des pistes (A, B) a un coefficient de frottement de l'ordre de 0,30.

6. Embrayage suivant l'une quelconque des revendications 1 à 5, **caractérisé en ce qu'**il est associé des moyens de progressivité (18A,18B aux garnitures de frottement (13A, 13B) de l'une et de l'autre des pistes (A, B).

7. Embrayage selon la revendication 1, **caractérisé en ce que** le plateau de pression (12) est massif et d'un seul tenant et **en ce que** la face du plateau de pression (12) tournée vers le disque d'embrayage présente annulairement en creux une gorge annulaire qui la subdivise en deux zones (22A, 22B) correspondant chacune respectivement aux pistes (A, B) de ce disque d'embrayage.

8. Embrayage suivant l'une quelconque des revendications 1 à 7, **caractérisé en ce que** l'épaisseur au repos du disque d'embrayage (15) au droit de la première piste (A, B) est supérieure à son épaisseur au droit de la seconde piste (B, A).

9. Embrayage selon l'une quelconque des revendications 1 à 6, **caractérisé en ce que** le plateau de pression est en deux parties (12a, 12b) correspondantes chacune respectivement aux pistes (A, B) et **en ce qu'**il est prévu entre ces parties des épaulements transversaux de butée (26a, 26b) pour limiter la course de l'une des parties par rapport à l'autre en direction du plateau de réaction (11).

10. Embrayage selon l'une quelconque des revendications 1 à 6, **caractérisé en ce que** l'épaisseur au repos du disque d'embrayage (15) au droit de la première piste (A, B) est inférieure à celle de ce disque d'embrayage (15) au niveau de la deuxième piste.

## Patentansprüche

1. Kupplung, die eine Gegenanpreßplatte (11) und eine im Verhältnis zu dieser axial beweglich gelagerte Druckplatte (12) umfaßt, mit einer ringförmig zwischen diesen beiden Platten (11, 12) zum Einsatz kommenden Kupplungsscheibe (15), die mit Reibbelägen (13A, 13B) bestückt ist, die entlang zwei verschiedenen konzentrischen Bahnen (A, B) verteilt sind, wobei eine der Bahnen (A, B), die als erste Bahn bezeichnet wird, einerseits für eine Schlupfkontrolle bestimmt und andererseits mit Progressivitätsmitteln (18A, 18B) verbunden ist, wobei die als zweite Bahn bezeichnete andere Bahn (3, A) einerseits für die Drehmomentübertragung sowohl beim Starten als auch beim Einrücken der Kupplung bestimmt ist und andererseits einen Werkstoff, aus dem der oder die Reibbeläge (13A, 133) bestehen, aufweist, der von dem oder denen der ersten Bahn verschieden ist und einen höheren Reibungskoeffizient als derjenige der ersten Bahn besitzt, und wobei im Ruhezustand - Nullast durch die Druckplatte und Gegenanpreßplatte an die Reibbahnen (A, 3) übertragen - ein axialer Versatz zwischen den beiden Bahnen (A, 3) besteht, so daß die erste Bahn beim Einrücken der Kupplung (10) als erste wirksam wird und eine Höhe aufweist, die kleiner als die der zweiten Bahn ist, **dadurch gekennzeichnet, daß** in Kombination einerseits im Ruhezustand die axiale Dicke (E_{A}) der Kupplungsscheibe (15) in Höhe der ersten Bahn (A) von der axialen Dicke (E_{B}) der Kupplungsscheibe (15) in Höhe der zweiten Bahn (B) verschieden ist und andererseits die Druckplatte (12) aus zwei Teilen besteht, die jeweils den Bahnen entsprechen, daß der Werkstoff, aus denen der oder die Reibbeläge der ersten Bahn (A, B) bestehen, ein feuerfester Werkstoff ist, der eine große Reibungsstabilität aufweist und im Betrieb nur in geringem Maße verschleißanfällig ist und daß die zweite Bahn (B, A) starr an einer der Platten Druckplatte (12) und Gegenanpreßplatte (11) angebracht oder mit Progressivitätsmitteln verbunden ist, die einen höheren Progressivitätskoeffizienten als die mit der ersten Bahn (A) verbundenen Mittel aufweisen.

2. Kupplung nach Anspruch 1, **dadurch gekennzeichnet, daß** der feuerfeste Werkstoff ein Sinterwerkstoff auf Bronzebasis ist.

3. Kupplung nach Anspruch 1, **dadurch gekennzeichnet, daß** der feuerfeste Werkstoff ein Werkstoff auf Kohlenstoffbasis ist.

4. Kupplung nach einem der Ansprüche 1 bis 4, **dadurch gekennzeichnet, daß** der feuerfeste Werkstoff einen Reibungskoeffizienten zwischen 0,15 und 0,20 hat.

5. Kupplung nach einem der Ansprüche 1 bis 4, **dadurch gekennzeichnet, daß** der Werkstoff, aus dem der oder die Reibbeläge (13A, 13B) der anderen der Bahnen (A, B) bestehen, einen Reibungskoeffizienten in einer Größenordnung von 0,30 hat.

6. Kupplung nach einem der Ansprüche 1 bis 5, **dadurch gekennzeichnet, daß** sie mit Progressivitätsmitteln (18A, 18B) für die Reibbeläge (13A, 13B) der einen und der anderen der Bahnen (A, B) verbunden ist.

7. Kupplung nach Anspruch 1, **dadurch gekennzeichnet, daß** die Druckplatte (12) massiv und einstückig ausgeführt ist und daß die zur Kupplungsscheibe gerichtete Fläche der Druckplatte (12) ringförmig vertieft eine ringförmige Auskehlung aufweist, die sie in zwei Bereiche (22A, 22B) unterteilt, die jeweils einer der Bahnen (A, B) dieser Kupplungsscheibe entsprechen.

8. Kupplung nach einem der Ansprüche 1 bis 7, **dadurch gekennzeichnet, daß** im Ruhezustand die Dicke der Kupplungsscheibe (15) in Höhe der ersten Bahn (A, B) größer als ihre Dicke in Höhe der zweiten Bahn (B, A) ist.

9. Kupplung nach einem der Ansprüche 1 bis 6, **dadurch gekennzeichnet, daß** die Druckplatte aus zwei Teilen (12a, 12b) besteht, die jeweils einer der Bahnen (A, B) entsprechen, und daß zwischen diesen Teilen Queranschlagschultern (26a, 26b) vorgesehen sind, um den Verstellweg eines der Teile im Verhältnis zum anderen in Richtung der Druckplatte (11) zu begrenzen.

10. Kupplung nach einem der Ansprüche 1 bis 6, **dadurch gekennzeichnet, daß** im Ruhezustand die Dicke der Kupplungsscheibe (15) in Höhe der ersten Bahn (A, B) kleiner als die Dicke dieser Kupplungsscheibe (15) in Höhe der zweiten Bahn ist.

## Claims

1. Clutch of the type including a reaction plate (11) and, mounted axially movable with respect to it, a pressure plate (12), with, intervening in annular fashion between these two plates (11, 12), a clutch disc (15) equipped with friction linings (13A, 13B) distributed into two separate concentric tracks (A, B), in which one of the tracks (A, B), called first track, on the one hand, is assigned to a control of slipping, and, on the other hand, is associated with progressiveness means (18A, 18B), while the other track (B, A), called second track, on the other hand, is assigned to the transmission of torque, both on starting as well as in the course of the engagement of the clutch and, on the other hand, has a material constituting the friction lining or linings (13A, 13B) which is different from that or those of the first track in having a coefficient of friction which is higher than that of the first track, in which at rest - zero load transmitted by the pressure and reaction plates to the friction tracks (A, B) - there exists an axial offset between the two tracks (A, B) in such a way that the first track is the first one to come into action upon engagement of the clutch (10) and has a lesser height than that of the second track, **characterised in that**, in combination, on the one hand, at rest, the axial thickness (EA) of the friction disc (15) in line with the first track (A) is different from the axial thickness (EB) of the clutch disc (15) in line with the second track (B) and, on the other hand, the pressure plate (12) is in two parts each corresponding respectively to the tracks, and **in that** the constituent material of the friction lining or linings of the first track (A, B) is made of refractory material exhibiting great frictional stability while being subject to low wear in service, and **in that** the second track (B, A) is carried rigidly by one of the pressure (12) and reaction (11) plates or is associated with progressiveness means having a progressiveness coefficient which is higher than those associated with the first track (A).

2. Clutch according to Claim 1, **characterised in that** the said refractory material is a bronze-based sintered material.

3. Clutch according to Claim 1, **characterised in that** the said refractory material is carbon-based.

4. Clutch according to any one of Claims 1 to 3, **characterised in that** the said refractory material has a coefficient of friction lying between 0.15 and 0.20.

5. Clutch according to any one of Claims 1 to 4, **characterised in that** the constituent material of the friction lining or linings (13A, 13B) of the other of the tracks (A, B) has a coefficient of friction of the order of 0.30.

6. Clutch according to any one of Claims 1 to 5, **characterised in that** progressiveness means (18A, 18B) are associated with the friction linings (13A, 13B) of both of the tracks (A, B).

7. Clutch according to Claim 1, **characterised in that** the pressure plate (12) is solid and in a single piece and **in that** the face of the pressure plate (12) which is turned towards the friction disc features, in annular fashion, recessed, an annular groove which subdivides it into two regions (22A, 22B) each corresponding respectively to the tracks (A, B) of this friction disc.

8. Clutch according to any one of Claims 1 to 7, **characterised in that** the thickness, at rest, of the clutch disc (15) in line with the first track (A, B) is greater than its thickness in line with the second track (B, A).

9. Clutch according to any one of Claims 1 to 6, **characterised in that** the pressure plate is in two parts (12a, 12b) each corresponding respectively to the tracks (A, B) and **in that** transverse abutment shoulders (26a, 26b) are provided in order to limit the travel of one of the parts with respect to the other in the direction of the reaction plate (11).

10. Clutch according to any one of Claims 1 to 6, **characterised in that** the thickness, at rest, of the clutch disc (15) in line with the first track (A, B) is less than that of this clutch disc (15) in the region of the second track.
